# EUROPÄISCHE PATENTSCHRIFT

(11) **EP 1 386 830 B1**
(45) Veröffentlichungstag und Bekanntmachung des Hinweises auf die Patenterteilung: **24.02.2016**
(21) Anmeldenummer: 03016483.4
(22) Anmeldetag: 22.07.2003
(51) Int. Cl.: B62D 25/08, B60N 2/36

(54) **Bodyintegrierter Sitzhalter**
Body integrated seat holder
Support de banquette intégré dans la structure de véhicule

(30) Priorität: 01.08.2002 DE 10235112
(43) Veröffentlichungstag der Anmeldung: 04.02.2004
(73) Patentinhaber: GM Global Technology Operations LLC, Detroit, MI 48265-3000 (US)
(72) Erfinder: Schmidt, Reiner, 55252 Mainz-Kastel (DE); Winter, Jens, 55296 Gau-Bischofsheim (DE)
(74) Vertreter: Spitzfaden, Ralf

(56) Entgegenhaltungen:
- DE-A- 10 162 022
- FR-A- 2 821 323
- US-A- 5 350 214
- US-A- 5 997 068
- US-B1- 6 206 459

## Beschreibung

Die Erfindung richtet sich auf eine Anordnung mit einem Hinterrückenhalter und einem Verstärkungswinkel eines Kraftfahrzeuges mit bei vertikal ausgerichtetem Hinterrücken der Rücklehne in ein Verriegelungsschloss des Hinterrückens eingreifendem Bolzen oder Bügel, der an der Karosserieinnenwand und der daran anschließenden Radhausinnenwand befestigbar ist.

Kraftfahrzeuge können mit fest an die Karosserie - bzw. Bodystruktur des Fahrzeugs fixierten Rückenlehnen ausgestattet werden. Eine umklappbare Rückenlehne eröffnet demgegenüber eine variablere Nutzungsmöglichkeit für die durch die Rückenlehne getrennten Bereiche eines Kraftfahrzeuges. Eine umklappbare Rückenlehne ermöglicht es somit bei Personenkraftwagen dem Nutzer, bei umgeklappter Rückenlehne große Gegenstände vom Kofferraum aus in den Innenraum durchzuladen. Für umklappbare Rückenlehnen muss aber eine von dem Nutzer lösbare Halterung für die Rückenlehne geschaffen werden, die fest an die Karosserie des Fahrzeugs angebunden ist. Eine solche Halterung muss den Anforderungen, die in verschiedenen Testverfahren, beispielsweise dem Crash-Test oder dem Schutz-vor-Ladungs-Test genügen.

Solche Halter können beispielsweise aus einem Rahmen oder Profil bestehen, der/das im Bereich des hinteren Radhauses an der Karosserieinnenwand und auf der Oberseite der Radhausinnenwand aufliegend dort mit der Karosserie verschweißt ist. An einem solchen Rahmen oder Profil ist dann ein Bolzen oder Bügel angeordnet, der bei vertikal ausgerichtetem Hinterrücken der Rücklehne in ein Verriegelungsschloss des Hinterrückens der Rückenlehne eingreift. Ein solcher Halter ist im Weiteren als Hinterrückenhalter bezeichnet. Solche Hinterrückenhalter sind in der Regel relativ kurz ausgebildet, d.h. sind von kurzer Baulänge. Damit können sie aber keinen wesentlichen Beitrag zur Erhöhung der Steifigkeit der Karosserie- oder Bodystruktur des Fahrzeuges liefern. Insbesondere bei Fliesheck- oder Kombifahrzeugen wäre dies aber wünschenswert.

Aus der FR-A-2821323, welche Spät veröffentlicht wurde , ist ein Hinterrückenhalter mit einem mehrteiligen Aufbau insbesondere einem mehrteiligen Grundelement bekannt.

Nachteil dieser Lösung ist, dass durch die mehrteilige Ausbildung zusätzliche Bauteile benötigt werden und mehre Montageschritte bei der Herstellung erforderlich sind.

Weitere Hinterrückenhalter sind aus der US 5,350,214, der US 5,997,068 sowie der US 6,206,459 bekannt.

Der Erfindung liegt daher die Aufgabe zugrunde, einen bezüglich seines Kräfteaufnahmevermögens und Bauteilanzahl verbesserte Anordnung mit Hinterrückenhalter und Verstärkungswinkel zu schaffen.

Diese Aufgabe wird durch eine Anordnung nach Anspruch 1 gelöst. Vorteilhafte Ausgestaltungen sind den Unteransprüchen zu entnehmen. Ferner wird die Aufgabe durch ein Kraftfahrzeug gelöst, welches eine solche Anordnung enthält.

Hiermit wird eine Anordnung mit einem Hinterrückenhalter und Verstärkungselement geschaffen, bei welcher der Hinterrückenhalter einerseits mit dem Verriegelungsschloss der Rückenlehne zusammenwirkt und hier eine bekannt stabile und feste Verbindung realisiert, der aber andererseits zusätzlich in seiner Befestigungslage in die Karosserie- oder Bodystruktur des Fahrzeugs eingebunden ist und hier versteifend auf das hintere Radhaus einwirkt. Der Hinterrückenhalter bildet einerseits eine crashsichere Lehnenanbindung aus, die ein ungewolltes Umklappen der Rückenlehne verhindert, insbesondere den Anforderungen des Schutz-vor-Ladungs-Tests genügt und ein Eindringen von Ladung aus dem Kofferraum in den Innenraum verhindert. Andererseits wird durch den in seiner Befestigungslage auf der karosserieinnenseitigen Wandkontur des Radhauses aufliegenden Hinterrückenhalter das Radhaus stabilisiert und in seiner Verbindungssteifigkeit erhöht. Dies verbessert gleichzeitig die Dauerlaufeigenschaften der Karosserie- bzw. Bodystruktur.

Für die Integration in und das Zusammenwirken mit der aus verschiedenen Elementen bestehenden Konfiguration der Karosserie- oder Bodystruktur zeichnet sich die Anordnung in vorteilhafter Ausgestaltung der Erfindung dadurch aus, dass der Hinterrückenhalter Anschlags- und/oder Verbindungsflächen für das Zusammenwirken mit einem in der Nähe des Bolzens oder Bügels am Radhaus befestigbaren Halter für einen Dämpfer und/oder einem das Bodenblech mit der Radhausinnenwand verbindenden Verstärkungswinkel aufweist. Hierdurch ist der Hinterrückenhalter günstig in die den Halter für den Dämpfer und den Verstärkungswinkel aufweisende Karosserie- bzw. Bodystruktur integrierbar bzw. einbindbar. Der Hinterrückenhalter ist als Karosseriebauteil bzw. Karosseriestrukturelement ausgebildet und weist neben dieser Funktion zusätzlich die Funktion der Anbindung der Rückenlehne an die Fahrzeugkarosserie auf. Aufgrund dieser Doppelfunktion entfällt gegenüber üblichen Konstruktionen ein Bauteil.

Ein separat ausgebildeter Sitzhalter ist durch die Integration des Hinterrückenhalters in die Bodystruktur nicht mehr notwendig.

Um eine dauerhaft feste Anbindung an die Karosseriestruktur zu ermöglichen, sieht die Erfindung in Ausgestaltung weiterhin vor, dass der Hinterrückenhalter Schweißflansche aufweist, die in seiner Befestigungslage verschweißbar auf der Radhausinnenwand und/oder der Karosserieseiteninnenwand aufliegen.

Eine besonders vorteilhafte Verbindung mit bzw. Einbindung in die Karosserie- Bodystruktur ergibt sich weiterhin dadurch, dass der Hinterrückenhalter in seiner Befestigungslage derart in eine Übereinanderlage mit der Radhausinnenwand und dem Halter für einen Dämpfer bringbar ist, dass er in seinem unteren Bereich mittels einer Dreifachschweißung von Hinterrückenhalter - Radhausinnenwand - Halter für einen Dämpfer mit der Radhausinnenwand und dem Dämpferhalter dauerhaft fest in die kraftaufnehmende Karosseriestruktur einbindbar ist. Insbesondere verhindert die Dreifachschweißung im unteren Bereich des Hinterrückenhalters ein Einreißen der Radhausinnenwand im Dauerlaufbetrieb.

Zweckmäßig ist es hierbei weiterhin, wenn der Halter in seinem unteren Bereich mit einem das Bodenblech und die Radhausinnenwand verbindenden Verstärkungswinkel in die kraftaufnehmende Karosseriestruktur einbindbar ist.

Für die Erhöhung der Verwindungs- bzw. Torsionssteifigkeit des Kraftfahrzeughinterwagens im Bereich der Anordnung des Hinterrückenhalters ist es von besonderem Vorteil, wenn der Hinterrückenhalter und/oder der Verstärkungswinkel und/oder der Dämpferhalter kastenprofilförmig oder U-profilförmig ausgebildet ist/sind, wie dies die Erfindung ebenfalls vorsieht.

Eine durch Torsionssteifigkeit verbesserte Karosserie verhält sich erschütterungsfreier und vermittelt den Insassen ein ruhigeres Fahrempfinden. Insbesondere führt diese Profilierung der aufgezählten Elemente ergänzend zu der Dreifachschweißung zu einer Stabilisierung des Radhauses und der Vermeidung von Einrissen im Dauerlaufbetrieb.

Ganz besonders sind die vorstehend aufgeführten Vorteile realisiert, wenn der Hinterrückenhalter mit der Karosserieseiteninnenwand und der Radhausinnenwand und dem Verstärkungswinkel und dem Halter für den Dämpfer verschweißt ist und derart eine kraftaufnehmende Karosseriestruktur ausbildet. In diesem Gesamtzusammenhang ergeben sich darüber hinaus noch die weiteren Vorteile, dass ein geringerer Handlingsaufwand dadurch entsteht, dass kein zusätzliches Sitzanbindungsteil oder -element notwendig ist, und damit auch Schweißoperationen entfallen, was Kosten und Aufwand spart.

Bei einem gattungsgemäßen Kraftfahrzeug wird die obenstehende Aufgabe gemäß der Erfindung dadurch gelöst, dass die Anordnung mit dem Hinterrückenhalter als funktional in die kraftaufnehmende Karosserie - oder Bodystruktur des Kraftfahrzeugs eingebundenes, den Bereich des hinteren Radhauses aussteifendes Karosseriebauteil ausgebildet ist, das sich in seiner Befestigungslage von der Karosserieinnenwand zumindest bin in die Nähe des Karosseriebodenblechs erstreckt und dabei zumindest teilweise auf der karosserieinnenseitigen Wandkontur des Radhauses aufliegt.

Ein mit der Anordnung ausgestattetes Kraftfahrzeug weist dieselben Vorteile auf, wie sie vorstehend im Zusammenhang mit der erfindungsgemäßen Anordnung aufgeführt sind. Es wird darauf verzichtet, diese an dieser Stelle nochmals zu wiederholen.

Zweckmäßigerweise ist das Kraftfahrzeug mit einem Hinterrückenhalter ausgestattet, der Anschlags- und/oder Verbindungsflächen für das Zusammenwirken mit einem in der Nähe des Bolzens oder Bügels am Radhaus befestigten Halter für einen Dämpfer und/oder einem das Bodenblech mit der Radhausinnenwand verbindenden Verstärkungswinkel aufweist.

In Ausgestaltung sieht die Erfindung weiterhin vor, dass der Hinterrückenhalter Schweißflansche aufweist, die auf der Radhausinnenwand und/oder der Karosserieseiteninnenwand aufliegend mit diesen jeweils verschweißt sind.

Für die Verwindungs- oder Torsionssteifigkeit des Radhauses ist es weiterhin besonders vorteilhaft, wenn der Hinterrückenhalter in seinem unteren Bereich mittels einer Dreifachschweißung von Hinterrückenhalter - Radhausinnenwand-Halter für einen Dämpfer mit der Rad¬hausinnenwand und dem Dämpferhalter dauerhaft fest verschweißt und in die kraftaufnehmende Karosseriestruktur eingebunden ist.

Hierbei ist es für die Ausgestaltung des Kraftfahrzeuges weiterhin zweckmäßig, wenn der Hinterrückenhalter in seinem unteren Bereich mit einem das Bodenblech und die Radhausinnenwand verbindenden Verstärkungswinkel verschweißt und in die kraftaufnehmende Karosseriestruktur eingebunden ist.

Schließlich sieht die Erfindung für das Kraftfahrzeug vor, dass der Hinterrückenhalter und/oder der Verstärkungswinkel und/oder der Dämpferhalter kastenprofilförmig oder U-profilförmig ausgebildet ist/sind.

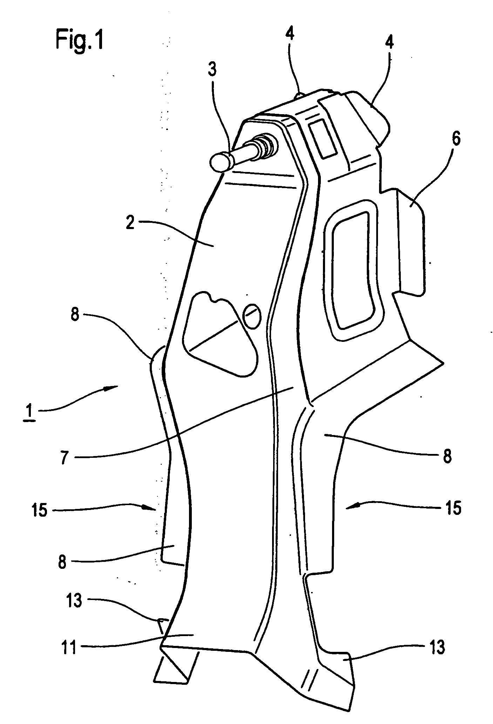

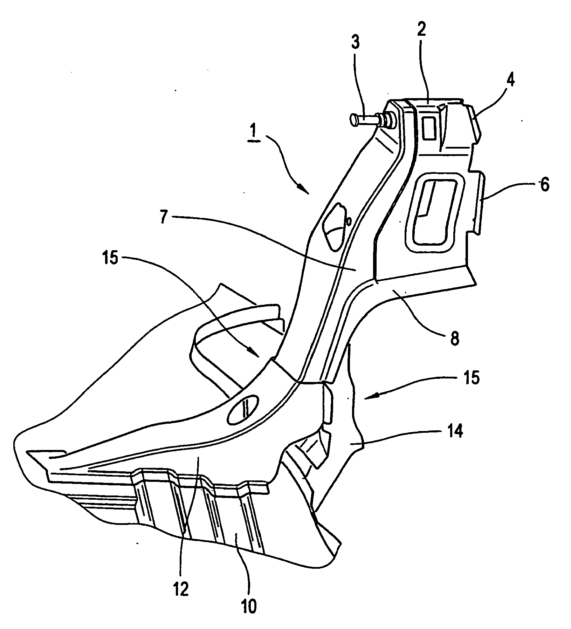

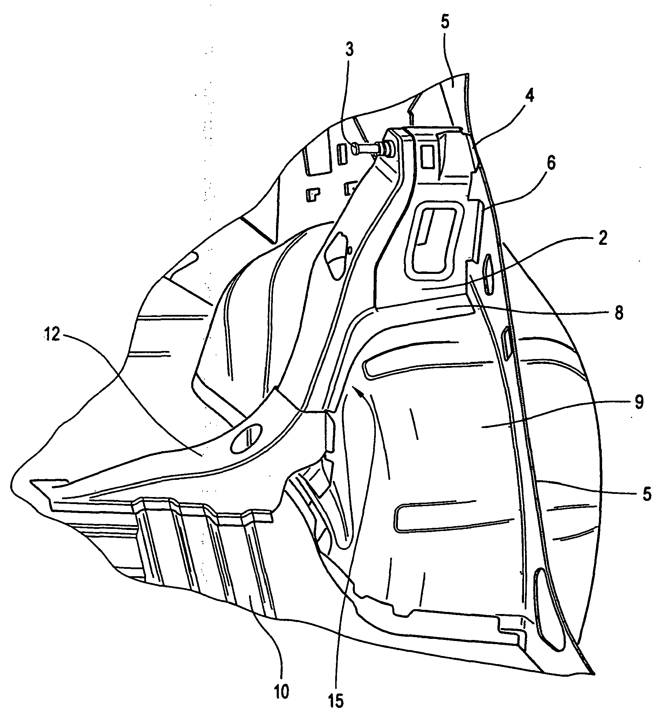

Die Erfindung ist nachstehend anhand der Zeichnung beispielsweise näher erläutert. Diese zeigt in
- Fig. 1: einen Hinterrückenhalter der erfindungsgemäßen Anordnung,
- Fig. 2: den Hinterrückenhalter in Verbindung mit Teilen der Karosseriestruktur und in
- Fig. 3: den Hinterrückenhalter in seiner Befestigungslage.

Der Hinterrückenhalter 1 besteht im Wesentlichen aus einem kastenprofilförmigen oder U-profilförmigen Grundelement 2. Im oberen Bereich des Grundelements 2 ist an diesem ein Bolzen 3 befestigt, der bei vertikal ausgerichtetem Hinterrücken der Rückenlehne eines Kraftfahrzeuges in ein Verriegelungsschloss des Hinterrückens eingreift. Auf der dem Bolzen 3 gegenüber liegenden Seite des Grundelementes sind Verbindungsflächen ausbildende Schweißflansche ausgebildet, mit welchen der Hinterrückenhalter 1 in seiner aus der Figur 3 ersichtlichen Befestigungslage an der Karosserieinnenwand 5 befestigt, d.h. mit dieser verschweißt ist. Ebenso ist der Hinterrückenhalter 1 mit weiteren Schweißflanschen 6 ausgestattet, die unterhalb der Flansche 4 angeordnet sind und ebenfalls in der Befestigungslage des Hinterrückenhalters 1 mit der Karosserieinnenwand 5 verschweißt sind. Unterhalb der Schweißflansche 6 reduziert sich die Erstreckung der Seitenwandflächen 7 des Grundelementes 2, wobei an der sich bildenden Kante auf jeder Seite jeweils ein bogenförmig ausgebildeter Randflansch 8 angeformt ist. Die Randflansche 8 sind an die Außenkontur der Radhausinnenwand 9 angepasst und bilden ebenfalls Schweißflansche aus, die in der Befestigungslage des Hinterrückenhalters 1 auf der Außenfläche der Radhausinnenwand auf der Fahrzeuginnenseite aufliegen. Insgesamt erstrecken sich die Randflansche 8 von der Nähe der Karosserieinnenwand ausgehend über den beim fertigen Kraftfahrzeug der Reifenlauffläche gegenüberliegenden Bereich der Radhausinnenwand hinweg bis in den Seitenwandbereich der Radhausinnenwand hinein. Dort enden sie mit einem gewissen Abstand zum Bodenblech 10. Ungefähr in Höhe des dem Bodenblech 10 zugewandten Endes des Randflansches 8 weist die Rückwand des Grundelementes 2 einen bogenförmig ins Innere des Kraftfahrzeugs weisenden Abschnitt 11 auf. Dieser Abschnitt 11 ist als Anschlagsfläche und/oder Verbindungsfläche 11 für einen das Bodenblech 10 mit der Radhausinnenwand 9 verbindenden Verstärkungswinkel 12 ausgebildet. In diesem Bereich sind der Hinterrückenhalter 1 und der Verstärkungswinkel 12 miteinander verschweißt. In Verlängerung der Seitenwände des Abschnittes 11 sind an dem Hinterrückenhalter 1 weitere Schweißflansche 13 ausgebildet, mit welchen der Hinterrückenhalter 1 in seiner Befestigungslage ebenfalls mit der Radhausinnenwand 9 verschweißt ist.

In der Figur 2 ist noch ein Halter 14 für einen Dämpfer sichtbar, der auf der Außenseite der Radhausinnenwand 9 mittels einer Verschweißung befestigt ist und daher in der Figur 3 nicht sichtbar ist. Der Halter 14 für den Dämpfer liegt aber unmittelbar außenseitig an der Radhausinnenwand 9 an, so dass in dem mit den Pfeilen 15 angedeuteten Bereich mittels einer Dreifachschweißung der hier übereinanderliegenden Lagen des Hinterrückenhalters 1 und der Radhausinnenwand 9 und dem Dämpferhalter 14 eine die Radhausinnenwand 9 stabilisierende Verbindungsstruktur geschaffen wird.

Insgesamt wird mit Hilfe des sich von der Karosserieinnenwand 5 bis in die Nähe des Karosseriebleches 10 erstreckenden Hinterrückenhalters 1 ein Karosseriebauteil ausgebildet, dass funktional in die kraftausnehmende Karosserie- oder Bodystruktur des Kraftfahrzeugs eingebunden ist. Ein Teil der Bodystruktur wird von der Karosserieinnenwand 5, dem Hinterrückenhalter 1, der Radhausinnenwand 9, dem Verstärkungswinkel 12 und dem Dämpferhalter 14 gebildet. Der Hinterrückenhalter 1 ist in seiner Gebrauchslage mittels seiner Flansche 4 mit der Karosserieinnenwand 5 verschweißt. Des Weiteren liegt der Hinterrückenhalter 1 längs der Randflansche 8 auf der Oberseite der Radhausinnenwand 9 auf und ist hier mit dieser verschweißt. Ferner ist die Radhausinnenwand 9 im Bereich der Dreifachschweißung 15 sowohl mit den Flanschen 8 des Hinterrückenhalters 1 als auch mit dem Dämpferhalter 14 verschweißt. Schließlich ist der Verstärkungswinkel 12 im Bereich der Verbindungsfläche 11 mit dem Hinterrückenhalter 1 und auf seiner gegenüberliegenden Seite mit dem Bodenblech 10 verschweißt. Insgesamt ist der Hinterrückenhalter 1 damit als funktional in die kraftaufnehmende Karosserie- oder Bodystruktur des Kraftfahrzeuges eingebundenes, den Bereich des hinteren Radhauses aussteifendes Karosseriebauteil ausgebildet.

### Bezugszeichenliste

- 1: Hinterrückenhalter
- 2: Grundelement
- 3: Bolzen
- 4: Flansche
- 5: Karosserieinnenwand
- 6: Flansche
- 7: Seitenflächen
- 8: Randflansch
- 9: Radhausinnenwand
- 10: Bodenblech
- 11: Anschlags- / Verbindungsfläche
- 12: Verstärkungswinkel
- 13: Schweißflansch
- 14: Halter für Dämpfer
- 15: Bereich der Dreifachschweißung

## Patentansprüche

1. Anordnung, aufweisend einen Hinterrückenhalter (1) eines Kraftfahrzeuges mit bei vertikal aufgerichtetem Hinterrücken der Rückenlehne in ein Verriegelungsschloss des Hinterrückens eingreifendem Bolzen (3) oder Bügel, der an der Karosserieinnenwand (5) und der daran anschließenden Radhausinnenwand (9) befestigbar ist, sowie einen Verstärkungswinkel (12), welcher ein Karosseriebodenblech (10) mit der Radhausinnenwand (9) verbindet, wobei der Hinterrückenhalter (1) als funktional in die kraftaufnehmende Karosserie- oder Bodystruktur des Kraftfahrzeuges einbindbares, den Bereich des hinteren Radhauses aussteifendes Karosseriebauteil, das aus einem Grundelement ausgebildet ist, das sich in seiner Befestigungslage von der Karosserieinnenwand (5) zumindest bis in die Nähe des Karosseriebodenblechs (10) erstreckt und dabei zumindest teilweise auf der karosserieinnenseitigen Wandkontur des Radhauses aufliegt, und der Hinterrückenhalter (1) ferner Flansche und/oder Bereiche(8, 15) für das Zusammenwirken mit einem in der Nähe des Bolzens (3) oder Bügels am Radhaus befestigten Halter (14) für einen Dämpfer aufweist,
wobei Anschlags- und/oder Verbindungsflächen (11) weiterhin für das Zusammenwirken mit dem das Bodenblech (10) mit der Radhausinnenwand (9) verbindenden Verstärkungswinkel (12) ausgebildet sind, und der Hinterrückenhalter (1) in seinem unteren Bereich mit einem das Bodenblech (10) und die Radhausinnenwand (9) verbindenden Verstärkungswinkel (12) kombiniert und in die kraftaufnehmende Karosseriestruktur einbindbar ist, wobei auf der dem Bolzen (3) gegenüber liegenden Seite des Grundelementes Verbindungsflächen ausbildende Schweißflansche ausgebildet sind, mit welchen der Hinterrückenhalter (1) an der Karosserieinnenwand (5) verschweißt ist und wobei der Hinterrückenhalter (1) mit weiteren Schweißflanschen (6) ausgestattet ist, die unterhalb der Flansche (4) angeordnet sind und ebenfalls in der Befestigungslage des Hinterrückenhalters (1) mit der Karosserieinnenwand (5) verschweißt sind.

2. Anordnung nach Anspruch 1, **dadurch gekennzeichnet, dass** der Hinterrückenhalter (1) in seiner Befestigungslage derart in eine Übereinanderlage mit der Radhausinnenwand (9) und dem Halter (14) für einen Dämpfer bringbar ist, dass er in seinem unteren Bereich mittels einer Dreifachschweißung von Hinterrückenhalter (1) - Radhausinnenwand (9) - Halter (14) für einen Dämpfer mit der Radhausinnenwand (9) und dem Dämpferhalter (14) dauerhaft fest in die kraftaufnehmende Karosseriestruktur einbindbar ist.

3. Anordnung nach einem der vorangehenden Ansprüche,
**dadurch gekennzeichnet, dass** der Hinterrückenhalter (1) und/oder der Verstärkungswinkel (12) und/oder der Dämpferhalter (14) kastenprofilförmig oder U-profilförmig ausgebildet ist/sind.

4. Anordnung nach einem der vorangehenden Ansprüche,
**dadurch gekennzeichnet, dass** der Hinterrückenhalter (1) mit der Karosserieseiteninnenwand (5) und/oder der Radhausinnenwand (9) und/oder dem Verstärkungswinkel (12) und/oder dem Halter (14) für den Dämpfer verschweißt ist und derart eine kraftaufnehmende Karosseriestruktur ausbildet.

5. Kraftfahrzeug mit einer Anordnung gemäß einem der Ansprüche 1 bis 4.

6. Kraftfahrzeug nach Anspruch 5, **dadurch gekennzeichnet, dass** der Halterrücken (1) Schweißflansche (4, 6, 8, 13) aufweist, die auf der Radhausinnenwand (9) und / oder der Karosserieseiteninnenwand (5) aufliegend mit diesen jeweils verschweißt sind.

7. Kraftfahrzeug nach einem der Ansprüche 5 oder 6, **dadurch gekennzeichnet, dass** der Hinterrückenhalter (1) in seinem unteren Bereich (15) mittels einer Dreifachschweißung von Hinterrückenhalter (1) - Radhausinnenwand (9) - Halter (14) für einen Dämpfer mit der Radhausinnenwand (9) und dem Dämpferhalter (14) dauerhaft fest verscheißt und in die kraftaufnehmende Karosseriestruktur eingebunden ist.

8. Kraftfahrzeug nach einem der Ansprüche 5 bis 7, **dadurch gekennzeichnet, dass** der Hinterrückenhalter (1) in seinem unteren Bereich (11) mit einem das Bodenblech (10) und die Radhausinnenwand (9) verbindenden Verstärkungswinkel (12) verschweißt ist.

9. Kraftfahrzeug nach einem der Ansprüche 5 bis 8, **dadurch gekennzeichnet, dass** der Hinterrückenhalter (1) und/oder der Verstärkungswinkel (12) und/oder der Dämpferhalter (14) kastenprofilförmig oder U-profilförmig ausgebildet ist/sind.

## Claims

1. An arrangement, comprising a rear back retainer (1) of a motor vehicle with a bolt (3) or bracket engaging in a lock of the back rear when the back rear of the backrest is vertically upright, which bolt (3) or bracket can be fixed to the inner wall (5) of the car body and the adjoining inner wall (9) of the wheel housing, as well as a reinforcing angle (12) which connects a bottom plate (10) of the car body to the inner wall (9) of the wheel housing, wherein the rear back retainer (1) is formed as a car body component which can be integrated functionally in the force-absorbing car body or body structure of the motor vehicle, stiffens the region of the rear wheel housing and is formed from a base element which extends in its fastening position from the inner wall (5) of the car body at least up to the vicinity of the bottom plate (10) of the car body, and rests at least partly on the wall contour of the wheel housing on the inner side of the car body, and the rear back retainer (1) further comprises flanges and/or regions (8, 15) for interaction with a retainer (14) for a damper fixed close to the bolt (3) or the bracket on the wheel housing, wherein stop and/or connecting surfaces (11) are further formed for the interaction with the reinforcing angle (12) which connects the bottom plate (10) to the inner wall (9) of the wheel housing, and the rear back retainer (1) is combined in its bottom region with a reinforcing angle (12) which connects the bottom plate (10) and the inner wall (9) of the wheel housing, and can be integrated in the force-absorbing car body structure, wherein welding flanges forming connecting surfaces are formed on the side of the base element opposite the bolt (3), with which the rear back retainer (1) is welded to the inner wall (5) of the car body and wherein the rear back retainer (1) is provided with further welding flanges (6) which are arranged beneath the flanges (4) and are also welded to the inner wall (5) of the car body in the fastening position of the rear back retainer (1).

2. An arrangement according to claim 1, **characterized in that** the rear back retainer (1) can be brought to a stacked position with the inner wall (9) of the wheel housing and the retainer (14) for a damper that it can be rigidly integrated permanently in the force-absorbing car body structure in its bottom region by means of triple welding of rear back retainer (1), inner wall (9) of the wheel housing, and retainer (14) for a damper with the inner wall (9) of the wheel housing and the damper retainer (14).

3. An arrangement according to one of the preceding claims, **characterized in that** the rear back retainer (1) and/or the reinforcing angle (12) and/or the damper retainer (14) are formed in the shape of a box section or a U-profile.

4. An arrangement according to one of the preceding claims, **characterized in that** the rear back retainer (1) is welded together with the inner wall (5) of car body side and/or the inner wall (9) of the wheel housing and/or the reinforcing angle (12) and/or the retainer (14) for the damper, and thus forms a force-absorbing car body structure.

5. A motor vehicle with an arrangement according to one of the claims 1 to 4.

6. A motor vehicle according to claim 5, **characterized in that** the retainer back (1) comprises welding flanges (4, 6, 8, 13) which, when resting on the inner wall (9) of the wheel housing and/or the inner wall (5) of the car body side, are respectively welded thereto.

7. A motor vehicle according to one of the claims 5 or 6, **characterized in that** the rear back retainer (1) can be rigidly integrated permanently in its bottom region (15) by means of triple welding of rear back retainer (1), inner wall (9) of the wheel housing, and retainer (14) for a damper with the inner wall (9) of the wheel housing and the damper retainer (14), and is integrated in the force-absorbing car body structure.

8. A motor vehicle according to one of the claims 5 to 7, **characterized in that** the rear back retainer (1) is welded in its bottom region (11) to a reinforcing angle (12) which connects the bottom plate (10) and the inner wall (9) of the wheel housing.

9. A motor vehicle according to one of the claims 5 to 8, **characterized in that** the rear back retainer (1) and/or the reinforcing angle (12) and/or the damper retainer (14) are formed in the shape of a box section or a U-profile.

## Revendications

1. Dispositif comprenant un support de dossier arrière (1) d'un véhicule à moteur avec un boulon (3) ou un étrier qui se met en prise, quand l'arrière du dossier arrière est redressé verticalement, dans un verrou de l'arrière du dossier et qui peut être fixé sur la paroi intérieure de la carrosserie (5) et la paroi intérieure du logement de roue (9) qui s'y raccorde, ainsi qu'une équerre de renfort (12) qui relie une tôle de plancher de carrosserie (10) à la paroi intérieure du logement de roue (9), le support de dossier arrière (1) étant conformé comme un élément de carrosserie pouvant être intégré du point de vue fonctionnel dans la structure de carrosserie ou de châssis du véhicule à moteur absorbant les forces et raidissant la zone du logement de roue arrière, qui se compose d'un élément de base s'étendant, dans sa position de fixation, de la paroi intérieure de la carrosserie (5) au moins jusqu'à proximité de la tôle de plancher de carrosserie (10) et repose au moins en partie sur le contour de paroi du logement de roue situé du côté intérieur de la carrosserie, et le support de dossier arrière (1) présente en outre des brides et/ou des zones (8, 15) pour interagir avec une fixation (14) pour un amortisseur fixée à proximité du boulon (3) ou de l'étrier sur le logement de roue, des surfaces de butée et/ou de liaison (11) étant en outre formées pour l'interaction avec l'équerre de renfort (12) reliant la tôle de plancher (10) à la paroi intérieure du logement de roue (9) et le support de dossier arrière (1) étant combiné dans sa partie inférieure avec une équerre de renfort (12) reliant la tôle de plancher (10) à la paroi intérieure du logement de roue (9) et pouvant être intégré du point de vue fonctionnel dans la structure de carrosserie absorbant les forces, des brides de soudage formant des surfaces de liaison étant formées sur le côté de l'élément de base faisant face au boulon (3), avec lesquelles le support de dossier arrière (1) est soudé à la paroi intérieure de la carrosserie (5) et le support de dossier arrière (1) étant muni d'autres brides de soudage (6) qui sont disposées en dessous des brides (4) et qui sont également soudées à la paroi intérieure de la carrosserie (5) dans la position de fixation du support de dossier arrière (1).

2. Disposition selon la revendication 1, **caractérisée en ce que** le support de dossier arrière (1) peut, dans sa position de fixation, être amené à une position superposée à la paroi intérieure du logement de roue (9) et à la fixation (14) pour un amortisseur de telle manière qu'il puisse être intégré à demeure dans la structure de carrosserie absorbant la force dans sa partie inférieure au moyen d'une triple soudure du support de dossier arrière (1), de la paroi intérieure du logement de roue (9) et de la fixation (14) pour un amortisseur à la paroi intérieure du logement de roue (9) et à la fixation d'amortisseur (14).

3. Disposition selon l'une des revendications précédentes, **caractérisée en ce que** le support de dossier arrière (1) et/ou l'équerre de renfort (12) et/ou la fixation d'amortisseur (14) sont conformés comme des profilés en caisson ou des profilés en U.

4. Disposition selon l'une des revendications précédentes, **caractérisée en ce que** le support de dossier arrière (1) est soudé la paroi intérieure latérale de la carrosserie (5) et/ou à la paroi intérieure du logement de roue (9) et/ou à l'équerre de renfort (12) et/ou à la fixation (14) pour l'amortisseur et forme ainsi une structure de carrosserie absorbant les forces.

5. Véhicule à moteur avec une disposition selon l'une des revendications 1 à 4.

6. Véhicule à moteur selon la revendication 5, **caractérisé en ce que** le support de dossier (1) présente des brides de soudage (4, 6, 8, 13) qui reposent sur la paroi intérieure du logement de roue (9) et/ou la paroi intérieure latérale de la carrosserie (5) et sont soudées à celles-ci.

7. Véhicule à moteur selon l'une des revendications 5 ou 6, **caractérisé en ce que** le support de dossier arrière (1) est soudé à demeure dans sa partie inférieure (15) au moyen d'une triple soudure du support de dossier arrière (1), de la paroi intérieure du logement de roue (9) et de la fixation (14) pour un amortisseur à la paroi intérieure du logement de roue (9) et à la fixation d'amortisseur (14) et intégré dans la structure de carrosserie absorbant les forces.

8. Véhicule à moteur selon l'une des revendications 5 à 7, **caractérisé en ce que** le support de dossier arrière (1) est soudé dans sa partie inférieure (11) à une équerre de renfort (12) reliant la tôle de plancher (10) et la paroi intérieure du logement de roue (9).

9. Véhicule à moteur selon l'une des revendications 5 à 8, **caractérisé en ce que** le support de dossier arrière (1) et/ou l'équerre de renfort (12) et/ou la fixation d'amortisseur (14) sont conformés comme des profilés en caisson ou des profilés en U.
